# EUROPÄISCHE PATENTANMELDUNG

(11) **EP 4 398 456 A1**
(43) Veröffentlichungstag der Anmeldung: **10.07.2024**
(21) Anmeldenummer: 21955378.1
(22) Anmeldetag: 31.08.2021
(51) Int. Cl.: H02K 1/20

(54) **STATORKERN, STATORANORDNUNG UND MOTOR**

(71) Anmelder: Schaeffler Technologies AG & Co. KG, 91074 Herzogenaurach (DE)
(72) Erfinder: QIU, Huachao, Shanghai 201805 (CN)
(86) Internationale Anmeldenummer: PCT/CN2021/115510
(87) Internationale Veröffentlichungsnummer: WO 2023/028799

(57) **Zusammenfassung**

Die vorliegende Erfindung betrifft einen Statorkern, eine Statoreinheit und einen Motor. Der Statorkern (100) wird durch Schichten von Statorblechen gebildet, wobei jedes Statorblech umfasst: einen Blechkörper (1), der ringförmig ist und mit Zähnen (8) versehen ist, die in Umfangsrichtung auf einer radial inneren Seite verteilt sind; einen äußeren Ringabschnitt (2), der ringförmig ist, wobei der Blechkörper (1) konzentrisch im äußeren Ringabschnitt (2) angeordnet ist; und Balkenabschnitte (3, 4), die in Umfangsrichtung verteilt sind und jeweils mit dem Blechkörper (1) und dem äußeren Ringabschnitt (2) verbunden sind, wobei die Erstreckungsrichtung der Balkenabschnitte (3, 4) zu der Radialrichtung des Statorblechs geneigt ist. Die Statoreinheit umfasst den Statorkern (100) und eine Statorwicklung. Der Motor umfasst die Statoreinheit.

## Beschreibung

### Technisches Gebiet

Die vorliegende Offenbarung betrifft das technische Gebiet der Motoren und insbesondere einen Statorkern, eine Statoreinheit und einen Motor.

### Stand der Technik

Mit der Entwicklung der New-Energy-Automobilindustrie entwickeln sich auch die Antriebsmotoren weiter, hin zu höheren Spannungen, höheren Geschwindigkeiten und kleineren Abmessungen. Daher ist eine deutliche Verbesserung der Motorleistungsdichte erforderlich. Allerdings wird die Leistungsdichte eines Motors durch seine Wärmeableitungsfähigkeit begrenzt.

Bei einer aktuellen Lösung zur Motorkühlung kann ein Stator des Motors mithilfe eines Kühlwassermantels gekühlt werden, der an einem Motorgehäuse angebracht ist. Dabei wird die Außenfläche eines Statorkerns des Stators fest an das Motorgehäuse gepresst, um die Wärmeübertragung auf das durch den Kühlwassermantel strömende Kühlwasser zu ermöglichen, wobei die Wärme aus dem Motor durch abgeführtes Kühlwasser entfernt wird.

Gemäß dem Funktionsprinzip des Motors wird jedoch im Statorkern eine elektromagnetische Kraft erzeugt, die einen Rotor zur Erzeugung eines Drehmoments veranlasst. Dadurch verformt sich der Statorkern und vibriert. Da der Statorkern in engem Kontakt mit dem Motorgehäuse steht, werden diese Verformungen und Vibrationen auf das Motorgehäuse und den Kühlwassermantel übertragen, was zu Geräusch-, Vibrations- und Rauigkeitsproblemen (NVH, Noise, Vibration, Harshness) führt.

### Zusammenfassung der Erfindung

Daher besteht eine Aufgabe der vorliegenden Offenbarung darin, einen Motor bereitzustellen, bei dem die NVH-Leistung, insbesondere an einem Stator des Motors, verbessert werden kann.

Gemäß einem ersten Aspekt der vorliegenden Offenbarung wird die oben genannte Aufgabe durch einen Statorkern für eine Statoreinheit eines Motors gelöst. Der Statorkern wird durch Schichten von Statorblechen gebildet, wobei die Statorbleche jeweils einen Blechkörper, einen äußeren Ringabschnitt und Balkenabschnitte umfassen, wobei der Blechkörper ringförmig ist und auf einer radial inneren Seite mit in Umfangsrichtung verteilten Zähnen versehen ist, wobei der äußere Ringabschnitt ringförmig ist und der Blechkörper konzentrisch im äußeren Ringabschnitt angeordnet ist, wobei die Balkenabschnitte in Umfangsrichtung verteilt und jeweils mit dem Blechkörper und dem äußeren Ringabschnitt verbunden sind, und wobei Erstreckungsrichtungen der Balkenabschnitte zu einer Radialrichtung des Statorblechs geneigt sind.

Der hier erwähnte Motor ist insbesondere als Innenläufermotor konstruiert. Der Statorkern ist insgesamt hülsenförmig und ein Rotor des Motors kann in einem zentralen Loch des Statorkerns untergebracht werden. Dabei ist das Statorblech insgesamt ringförmig. In der Beschreibung hierin ist zu beachten, dass, sofern nicht ausdrücklich anders angegeben und eingeschränkt, die Begriffe "Axialrichtung", "Radialrichtung" und "Umfangsrichtung" alle auf einer Rotationsachse des Motors, d. h. einer Mittelachse des Statorblechs, basieren.

Dabei umfasst der Blechkörper des Statorblechs einen inneren Ringabschnitt und von dem inneren Ringabschnitt zur radial inneren Seite abstehende Zähne, wobei zwischen den Zähnen in Umfangsrichtung Schlitze gebildet sind. Vorzugsweise sind die Zähne oder Schlitze gleichmäßig in Umfangsrichtung verteilt. Nachdem die Statorbleche geschichtet sind, um den Statorkern zu bilden, können die inneren Ringabschnitte ein Statorjoch bilden und die Schlitze können Statornuten bilden.

Dabei umschließt der äußere Ringabschnitt konzentrisch den Blechkörper. Nachdem die Statorbleche geschichtet sind, um den Statorkern zu bilden, bilden die äußeren Ringabschnitte eine äußere Hülse zur Verbindung mit einem externen Bauteil, z. B. einem Motorgehäuse. Dabei ist eine radiale Größe des äußeren Ringabschnitts vorzugsweise schmal ausgelegt, während die Festigkeit erhalten bleibt, sodass eine zusätzliche radiale Größe des Statorkerns gering ist.

Dabei sind mehrere Balkenabschnitte einstückig zwischen dem äußeren Ringabschnitt und dem Blechkörper ausgebildet. Konkret sind die Balkenabschnitte in einem ringförmigen Raum verteilt, der durch den Blechkörper und den äußeren Ringabschnitt in Umfangsrichtung gebildet wird, wobei ein Endabschnitt auf einer radial äußeren Seite jedes der Balkenabschnitte mit dem äußeren Ringabschnitt verbunden ist, und ein Endabschnitt auf einer radial inneren Seite jedes der Balkenabschnitte mit dem inneren Ringabschnitt des Blechkörpers verbunden ist, wodurch hohle Abschnitte zwischen den Balkenabschnitten gebildet werden.

Der Balkenabschnitt erstreckt sich als Ganzes in einer Richtung, die zur Radialrichtung des Statorblechs geneigt ist, und daher ist die radiale Steifigkeit in einem ringförmigen Bereich zwischen dem äußeren Ringabschnitt und dem inneren Ringabschnitt des Blechkörpers gering. Nachdem die Statorbleche geschichtet sind, um den Statorkern zu bilden, bilden die oben erwähnten ringförmigen Bereiche, die die Balkenabschnitte umfassen, ein Isolationsband zwischen der äußeren Hülse, die aus den äußeren Ringabschnitten besteht, und dem Statorjoch, das aus den inneren Ringabschnitten besteht. Dabei kann das Isolationsband Vibrationen des Statorjochs während des Betriebs isolieren und auch Verformungen des Statorjochs während des Betriebs absorbieren, wodurch die NVH-Leistung am Stator des Motors verbessert wird. Dabei ist zu beachten, dass das Isolationsband auch stark genug sein sollte, um Drehmoment vom Statorjoch zu tragen und Vibrationen zu widerstehen, und darüber hinaus in der Lage sein sollte, die äußere Hülse so zu stützen, dass die äußere Hülse vorzugsweise am Motorgehäuse mittels Presspassung befestigt ist.

In einer bevorzugten Ausführungsform sind die Erstreckungsrichtungen der Balkenabschnitte in zwei Richtungen entlang der Umfangsrichtung abwechselnd zur Radialrichtung des Statorblechs geneigt. Mit anderen Worten sind die Erstreckungsrichtungen der Balkenabschnitte im Uhrzeigersinn und im Gegenuhrzeigersinn abwechselnd zur Radialrichtung des Statorblechs geneigt. Dabei ist es möglich, dass jeweils zwei benachbarte Balkenabschnitte abwechselnd geneigt zur Radialrichtung des Statorblechs in entgegengesetzte Umfangsrichtungen verlaufen. Es ist auch möglich, dass zwei, drei oder mehr benachbarte Balkenabschnitte als Balkenabschnittsgruppe verwendet werden, die Balkenabschnitte in der Balkenabschnittsgruppe in die gleiche Umfangsrichtung geneigt sind und die Balkenabschnitte in einer benachbarten Balkenabschnittsgruppe abwechselnd in entgegengesetzte Umfangsrichtungen geneigt sind. In diesem Fall ist der Statorkern besonders an einen Betriebszustand anpassbar, bei dem sich der Rotor des Motors in zwei Richtungen drehen muss.

In einer alternativen Ausführungsform sind die Erstreckungsrichtungen der Balkenabschnitte in einer Richtung entlang der Umfangsrichtung zur Radialrichtung des Statorblechs geneigt. Mit anderen Worten sind die Erstreckungsrichtungen aller Balkenabschnitte im Uhrzeigersinn zur Radialrichtung des Statorblechs geneigt oder sind die Erstreckungsrichtungen aller Balkenabschnitte im Gegenuhrzeigersinn zur Radialrichtung des Statorblechs geneigt. In diesem Fall ist der Statorkern besonders an einen Betriebszustand anpassbar, bei dem sich der Rotor des Motors in eine Richtung drehen muss.

Dabei kann die tatsächliche Struktur des Balkenabschnitts entsprechend den Anforderungen an die NVH-Eigenschaften des Motors gestaltet werden. Insbesondere kann der Balkenabschnitt als Ganzes eine geradlinige Form haben oder der Balkenabschnitt kann als Ganzes in einer Zickzack- oder Bogenform konstruiert sein.

In einer bevorzugten Ausführungsform sind Verbindungsabschnitte zwischen den Balkenabschnitten und dem Blechkörper und/oder Verbindungsabschnitte zwischen den Balkenabschnitten und dem äußeren Ringabschnitt mit abgerundeten Ecken versehen. Hierdurch können einerseits lokale Spannungskonzentrationen im Statorblech und Brüche in einem Balkenbereich vermieden werden, andererseits können die Balkenabschnitte auch teilweise modifiziert werden, um die Steifigkeit der Balkenabschnitte in Radialrichtung anzupassen. Beispielsweise kann durch die Gestaltung der abgerundeten Ecken der Balkenabschnitt als Ganzes Z-förmig in einer zur Radialrichtung geneigten Richtung verlaufen, wodurch die Steifigkeit des Balkenabschnitts in der Radialrichtung angepasst, insbesondere verringert wird.

In einer bevorzugten Ausführungsform sind zwischen benachbarten Balkenabschnitten in Umfangsrichtung hohle Abschnitte gebildet und mittels der hohlen Abschnitte sind durch zwei axiale Enden des Statorkerns verlaufende Kühlkanäle im Statorkern gebildet. In diesem Fall kann ein isolierendes Kühlmedium in den Kühlkanälen strömen, sodass Wärme am Statorkern auf das isolierende Kühlmedium übertragen und beim Abführen des isolierenden Kühlmediums vom Motor entfernt werden kann. In diesem Fall kann die Statoreinheit bzw. der Statorkern effektiv gekühlt werden, und bei Bedarf kann auf einen am Motorgehäuse angeordneten Kühlwassermantel verzichtet werden, wodurch die radiale Größe des Motors verringert wird.

Es ist zu beachten, dass der Statorkern mehrere Kühlkanäle umfasst, die den Statorkern separat in einer Axialrichtung durchqueren und in Umfangsrichtung verteilt sind. Der Einfachheit halber wird hier nur ein Kühlkanal zur beispielhaften Beschreibung verwendet.

In einer vorteilhaften Ausführungsform umfasst der Statorkern mehrere Blechstapel, die aus den Statorblechen bestehen, die in einer Axialrichtung verteilt sind, wobei in den Blechstapeln die Statorbleche jeweils in Axialrichtung fluchtend angeordnet sind, und hohle Abschnitte jedes der Statorbleche linear verlaufende Kühlkanalabschnitte bilden, wobei die Blechstapel so angeordnet sind, dass die Zähne aller Statorbleche des Statorkerns axial ausgerichtet sind und die Kühlkanalabschnitte benachbarter Blechstapel in Axialrichtung miteinander in Verbindung stehen und nicht vollständig ausgerichtet sind, sodass sie einen unterschiedlich verlaufenden Kühlkanal bilden. Durch diesen unterschiedlich verlaufenden Kühlkanal kann das isolierende Kühlmedium aufgrund eines größeren Strömungswiderstands mit geringerer Strömungsgeschwindigkeit und/oder aufgrund einer größeren Kanallänge länger im Statorkern strömen. In diesem Fall kann mehr Wärme des Statorkerns in das isolierende Kühlmedium übertragen werden, wodurch die Kühlwirkung verbessert wird.

Dabei ist es von Vorteil, dass die Kühlkanalabschnitte, die den oben erwähnten unterschiedlich verlaufenden Kühlkanal bilden, jeweils identisch aufgebaut sind und durch die relative Auslenkung jedes der Kühlkanalabschnitte in Umfangsrichtung eine mäanderförmige Erstreckungsrichtung des Kühlkanals gebildet wird. In diesem Fall sind die Statorbleche des Statorkerns identisch aufgebaut und der mäanderförmig verlaufende Kühlkanal wird durch die rotatorische Anordnung unterschiedlicher Blechstapel in Umfangsrichtung realisiert. Somit kann das isolierende Kühlmedium länger im Statorkern strömen und es kann mehr Wärme des Statorkerns in das isolierende Kühlmedium übertragen werden, wodurch die Kühlwirkung verbessert wird. Darüber hinaus kann die rotatorische Anordnung die Dickentoleranzen des Statorkerns, die durch Dickentoleranzen des Statorblechs verursacht werden, weiter vorteilhaft reduzieren.

Dabei ist es möglich, dass alle Statorbleche des Statorkerns identisch aufgebaut sind, wobei diese Statorbleche mehrere, vorzugsweise vier oder acht, Blechstapel bilden. In jedem Blechstapel sind die Statorbleche vollständig ausgerichtet angeordnet, d. h. so, dass die Balkenabschnitte und Zähne alle axial ausgerichtet sind. In einem Beispiel mit vier Blechstapeln können die Blechstapel gegenüber den benachbarten Blechstapeln um 90° in Umfangsrichtung gedreht werden. In einem Beispiel mit acht Blechstapeln können die Blechstapel gegenüber den benachbarten Blechstapeln um 45° in Umfangsrichtung gedreht werden.

Dabei ist es von Vorteil, dass unter den Kühlkanalabschnitten, die den oben erwähnten unterschiedlich verlaufenden Kühlkanal bilden, ein Zwischenkühlkanalabschnitt vorhanden ist, wobei der Zwischenkühlkanalabschnitt und die Kühlkanalabschnitte in Verbindung mit dem Zwischenkühlkanalabschnitt auf zwei axialen Seiten unterschiedlich aufgebaut sind, wodurch in den Erstreckungsrichtungen variierende Kanalquerschnitte der Kühlkanäle gebildet werden. In diesem Fall umfasst der Statorkern einen Zwischenblechstapel, wobei hinsichtlich der Konstruktion der hohlen Abschnitte Statorbleche des Zwischenblechstapels im Vergleich zu Statorblechen von Blechstapeln auf zwei axialen Seiten des Zwischenblechstapels unterschiedlich aufgebaut sind. Dabei weist der Kühlkanal durch die unterschiedlich aufgebauten Statorbleche einen in Erstreckungsrichtung variierenden Kanalquerschnitt auf, sodass das isolierende Kühlmedium länger im Statorkern strömen kann und mehr Wärme des Statorkerns in das isolierende Kühlmedium übertragen werden kann, wodurch die Kühlwirkung verbessert wird.

In einer vorteilhaften Ausführungsform ist ein Abstand zwischen den Balkenabschnitten in Umfangsrichtung so ausgelegt, dass der Kühlkanalabschnitt mindestens eines Blechstapels mit zwei Kühlkanalabschnitten des Blechstapels in Verbindung stehen kann, der zu dem mindestens einen Blechstapel axial benachbart ist, sodass der Kühlkanal mit Abzweigungen versehen ist. In diesem Fall ist es vorteilhaft, einen Strömungsbereich und eine Strömungsdauer des isolierenden Kühlmediums im Statorkern entsprechend den Kühlanforderungen anzupassen.

Gemäß einem zweiten Aspekt der vorliegenden Offenbarung wird die oben genannte Aufgabe durch eine Statoreinheit für einen Motor gelöst. Die Statoreinheit umfasst einen Statorkern und eine Statorwicklung, die gemäß den oben genannten Ausführungsformen aufgebaut sind.

Gemäß einem dritten Aspekt der vorliegenden Offenbarung wird die oben genannte Aufgabe durch einen Motor gelöst. Der Motor umfasst die oben erwähnte Statoreinheit.

Im Statorkern, in der Statoreinheit und im Motor, die in den oben genannten Ausführungsformen vorgesehen sind, kann durch die Gestaltung der Balkenabschnitte ein Isolationsband gebildet werden, das in der Lage ist, die Vibration des Statorjochs zu isolieren und die Verformung des Statorjochs zu absorbieren. Gleichzeitig kann mittels der Balkenabschnitte weiterhin ein Kühlkanal für den Durchfluss des isolierenden Kühlmediums gebildet werden, sodass der Statorkern direkt gekühlt werden kann. Dadurch können sowohl die NVH-Leistung als auch die Kühlwirkung am Stator des Motors verbessert werden.

### Kurzbeschreibung der Zeichnungen

Im Folgenden werden in Bezug auf die beigefügten Zeichnungen Eigenschaften, Vorteile und technische Wirkungen beispielhafter Ausführungsformen der vorliegenden Anmeldung beschrieben.
- FIG. 1: ist eine Vorderansicht eines Statorblechs gemäß einer Ausführungsform;
- FIG. 2: ist eine teilweise vergrößerte Ansicht von FIG. 1;
- FIG. 3: ist eine perspektivische Ansicht eines Statorkerns, der durch Schichten von Statorblechen gemäß FIG. 1 gebildet wird;
- FIG.: 4 ist eine perspektivische Ansicht eines Statorkerns gemäß FIG. 3, der in einem Motorgehäuse montiert ist; und
- FIG. 5: ist eine teilweise perspektivische Ansicht des Statorkerns gemäß FIG. 3, der in dem Motorgehäuse montiert ist.

### Ausführliche Beschreibung von Ausführungsformen

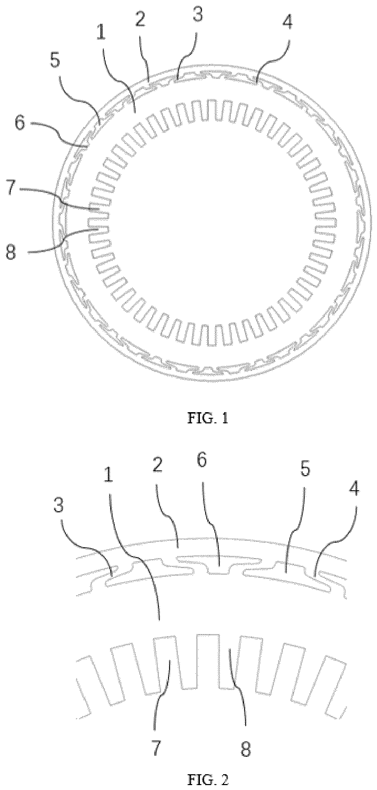

FIG. 1 zeigt eine Vorderansicht eines Statorblechs gemäß einer Ausführungsform. Das Statorblech kann in einem Antriebsmotor eines Elektrofahrzeugs verwendet werden. Dabei ist der Antriebsmotor als Innenläufermotor aufgebaut und umfasst eine Statoreinheit und eine Rotoreinheit. Die Statoreinheit umfasst einen Statorkern und eine Statorwicklung.

In dieser Ausführungsform wird der Statorkern durch Schichten von Statorblechen gebildet, wie in FIG. 1 gezeigt. FIG. 2 zeigt eine teilweise vergrößerte Ansicht von FIG. 1. Wie in FIG. 1 und 2 gezeigt, ist das Statorblech insgesamt ringförmig. Das Statorblech umfasst einen Blechkörper 1, einen äußeren Ringabschnitt 2 und Balkenabschnitte 3 und 4.

Der Blechkörper 1 umfasst einen inneren Ringabschnitt und Zähne 8, die sich vom inneren Ringabschnitt zu einer radial inneren Seite erstrecken. Hier sind die Zähne 8 gleichmäßig in Umfangsrichtung verteilt. Zwischen den Zähnen 8 sind in Umfangsrichtung Schlitze 7 gebildet.

Der äußere Ringabschnitt 2 ist ringförmig und umschließt konzentrisch den Blechkörper 1.

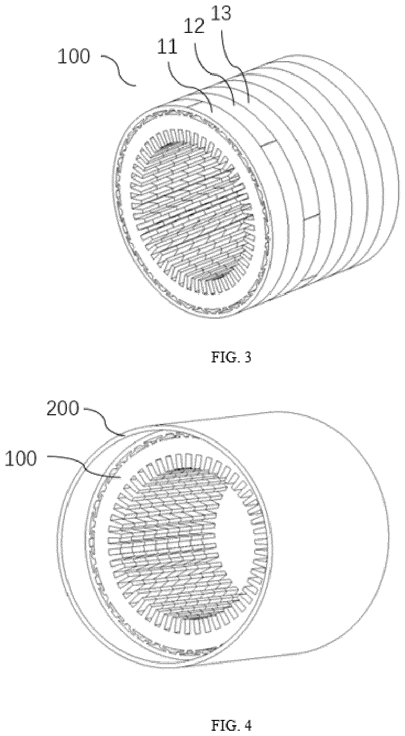

Mehrere Balkenabschnitte 3 und 4 sind einstückig zwischen dem äußeren Ringabschnitt 2 und dem inneren Ringabschnitt des Blechkörpers 1 ausgebildet. Die Balkenabschnitte 3 und 4 sind im Wesentlichen gleichmäßig in Umfangsrichtung verteilt. Die Balkenabschnitte 3 und 4 sind jeweils über einen Endabschnitt auf einer radial äußeren Seite davon mit dem äußeren Ringabschnitt 2 verbunden und sind über einen Endabschnitt auf einer radial inneren Seite davon mit dem inneren Ringabschnitt des Blechkörpers 1 verbunden. Erstreckungsrichtungen der Balkenabschnitte 3 und 4 sind in zwei Richtungen entlang der Umfangsrichtung abwechselnd zu einer Radialrichtung des Statorblechs geneigt. Insbesondere sind, wenn sie aus den in FIG. 1 und 3 gezeigten Richtungen betrachtet werden, die Balkenabschnitte 3 und 4 in Umfangsrichtung abwechselnd angeordnet, wobei die Erstreckungsrichtung des Balkenabschnitts 3 im Uhrzeigersinn zur Radialrichtung des Statorblechs geneigt ist und die Erstreckungsrichtung des Balkenabschnitts 4 im Gegenuhrzeigersinn zur Radialrichtung des Statorblechs geneigt ist. Daher werden zwischen den Balkenabschnitten 3 und 4 im Wesentlichen T-förmige oder umgekehrt T-förmige hohle Abschnitte 5 und 6 gebildet. Verbindungsabschnitte zwischen den Balkenabschnitten 3 und 4 und dem Blechkörper 1 sind mit abgerundeten Ecken versehen, Verbindungsabschnitte zwischen den Balkenabschnitten 3 und 4 und dem äußeren Ringabschnitt 2 sind mit abgerundeten Ecken versehen und somit sind auch jeweils die Balkenabschnitte 3 und 4 als Ganzes in einer Z-Form. Entsprechend der Auslegung der Z-förmigen, mit abgerundeten Ecken versehenen Balkenabschnitte können einerseits lokale Spannungskonzentrationen im Statorblech und Brüche in einem Balkenbereich vermieden werden und können andererseits die Balkenabschnitte 3 und 4 auch teilweise modifiziert werden, um die Steifigkeit der Balkenabschnitte 3 und 4 in Radialrichtung anzupassen. In diesem Fall ist die radiale Steifigkeit in einem ringförmigen Bereich zwischen dem äußeren Ringabschnitt 2 und dem inneren Ringabschnitt des Blechkörpers 1 gering.

FIG. 3 zeigt eine perspektivische Ansicht eines Statorkerns 100, der durch Schichten von Statorblechen gemäß FIG. 1 gebildet ist. Wie aus FIG. 1, 2 und 3 ersichtlich ist, bilden die Schlitze 7 nach dem Schichten der Statorbleche zur Bildung des Statorkerns 100 Statornuten des Statorkerns 100, bilden die inneren Ringabschnitte ein Statorjoch des Statorkerns 100, bilden die äußeren Ringabschnitte 2 eine äußere Hülse zur Verbindung mit einem Motorgehäuse 200 und bilden die ringförmigen Bereiche, die die Balkenabschnitte 3 und 4 umfassen, ein Isolationsband zwischen der äußeren Hülse und dem Statorjoch.

FIG. 4 zeigt eine perspektivische Ansicht eines Statorkerns 100 gemäß FIG. 3, der in dem Motorgehäuse 200 montiert ist. Wie in FIG. 4 gezeigt, ist der Statorkern 100 über eine äußere Hülse davon mittels Presspassung an einer radial inneren Seite des Motorgehäuses 200 befestigt. Wenn der Motor läuft, kann das Isolationsband dazu verwendet werden, Vibrationen vom Statorjoch zu isolieren und Verformungen des Statorjochs zu absorbieren, wodurch die Vibrationen und Verformungen reduziert werden, oder sogar verhindert wird, dass Vibrationen und Verformungen auf die äußere Hülse und dann auf das Motorgehäuse 200 übertragen werden. Dadurch wird die NVH-Leistung am Stator des Motors verbessert.

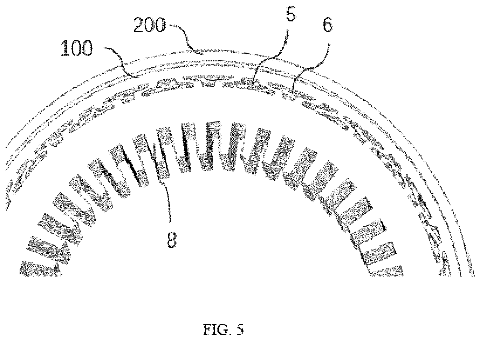

FIG. 5 ist eine teilweise perspektivische Ansicht des Statorkerns 100 gemäß FIG. 3, der in dem Motorgehäuse 200 montiert ist. Insbesondere sind, wie in FIG. 3, 4 und 5 gezeigt, Kühlkanäle, die durch zwei axiale Enden des Statorkerns 100 verlaufen, mittels der hohlen Abschnitte 5 und 6 im Statorkern 100 gebildet. In dieser Ausführungsform sind alle Statorbleche des Statorkerns 100 identisch aufgebaut und diese Statorbleche bilden acht Blechstapel 11, 12 und 13. In jedem der Blechstapel 11, 12 und 13 sind die Statorbleche vollständig ausgerichtet angeordnet, d. h. so, dass die Balkenabschnitte 3 und 4 und die Zähne 8 alle axial ausgerichtet sind. Daher werden in jedem Blechstapel linear verlaufende Kühlkanalabschnitte durch die entsprechenden hohlen Abschnitte 5 und 6 gebildet. Die Blechstapel 12 und 13 können gegenüber den benachbarten Blechstapeln 11 und 12 in Umfangsrichtung um 45° gedreht werden. Konkret wird der Blechstapel 12 gegenüber dem benachbarten Blechstapel 11 um 45° in Umfangsrichtung gedreht, der Blechstapel 13 wird gegenüber dem benachbarten Blechstapel 12 um 45° in der oben genannten Umfangsrichtung gedreht und so weiter. Dabei sind die Zähne 8 aller Statorbleche des Statorkerns 100 axial ausgerichtet und bilden dadurch axial verlaufende Statornuten. Gleichzeitig stehen die Kühlkanalabschnitte der benachbarten Blechstapel 11, 12 und 13 in Axialrichtung miteinander in Verbindung und sind nicht vollständig ausgerichtet, sodass die Kühlkanalabschnitte Kühlkanäle darstellen, die durch den Statorkern 100 in Axialrichtung und im Allgemeinen spiralförmig verlaufen.

In diesem Fall kann ein isolierendes Kühlmedium, z. B. Kühlöl, in den Kühlkanälen strömen, sodass Wärme am Statorkern auf das isolierende Kühlmedium übertragen und beim Abführen des isolierenden Kühlmediums vom Motor entfernt werden kann. Dabei sind die Kühlkanäle spiralförmig aufgebaut, sodass das isolierende Kühlmedium aufgrund eines größeren Strömungswiderstands mit geringerer Strömungsgeschwindigkeit und aufgrund einer größeren Kanallänge länger im Statorkern 100 strömen kann, wodurch die Kühlwirkung verbessert wird. In diesem Fall kann die Statoreinheit bzw. der Statorkern 100 effektiv gekühlt werden, ohne dass ein Kühlwassermantel am Motorgehäuse 200 notwendig ist, wodurch eine radiale Größe des Motors verringert wird. Darüber hinaus kann die rotatorische Anordnung der Blechstapel 11, 12 und 13 Dickentoleranzen des Statorkerns, die durch Dickentoleranzen des Statorblechs verursacht werden, weiter vorteilhaft reduzieren.

Offensichtlich sind die oben genannten Beispiele der vorliegenden Offenbarung nur beispielhaft, um die vorliegende Offenbarung klar zu beschreiben, und nicht, um die Ausführungsformen der vorliegenden Offenbarung einzuschränken. Für den Durchschnittsfachmann auf dem Gebiet können auf der Grundlage der oben genannten Beschreibung weitere unterschiedliche Formen von Änderungen oder Abwandlungen vorgenommen werden. Eine abschließende Auflistung aller Implementierungen ist weder notwendig noch möglich. Alle Änderungen, äquivalenten Ersetzungen und Verbesserungen, die auf der Grundlage des Geistes und Prinzips der vorliegenden Offenbarung vorgenommen werden, sollten in den Schutzumfang der vorliegenden Offenbarung einbezogen sein.

### Liste der Bezugszeichen

- 1: Blechkörper
- 2: Äußerer Ringabschnitt
- 3: Balkenabschnitt
- 4: Balkenabschnitt
- 5: Hohler Abschnitt
- 6: Hohler Abschnitt
- 7: Statornut
- 8: Zähne
- 11: Blechstapel
- 12: Blechstapel
- 13: Blechstapel

- 100: Statorkern
- 200: Gehäuse

## Patentansprüche

1. Statorkern (100) für eine Statoreinheit eines Motors, wobei der Statorkern (100) durch das Schichten von Statorblechen gebildet wird, wobei die Statorbleche jeweils Folgendes umfassen:
einen Blechkörper (1), wobei der Blechkörper (1) ringförmig ist und auf einer radial inneren Seite mit in Umfangsrichtung verteilten Zähnen (8) versehen ist;
einen äußeren Ringabschnitt (2), wobei der äußere Ringabschnitt (2) ringförmig ist und der Blechkörper (1) konzentrisch im äußeren Ringabschnitt (2) angeordnet ist; und
Balkenabschnitte (3, 4), wobei die Balkenabschnitte (3, 4) in Umfangsrichtung verteilt und jeweils mit dem Blechkörper (1) und dem äußeren Ringabschnitt (2) verbunden sind, und wobei Erstreckungsrichtungen der Balkenabschnitte (3, 4) zu einer Radialrichtung des Statorblechs geneigt sind.

2. Statorkern (100) nach Anspruch 1, wobei die Erstreckungsrichtungen der Balkenabschnitte (3, 4) in zwei Richtungen entlang der Umfangsrichtung abwechselnd zur Radialrichtung des Statorblechs geneigt sind.

3. Statorkern (100) nach Anspruch 1 oder 2, wobei die Verbindungsabschnitte zwischen den Balkenabschnitten (3, 4) und dem Blechkörper (1) und/oder die Verbindungsabschnitte zwischen den Balkenabschnitten (3, 4) und dem äußeren Ringabschnitt (2) mit abgerundeten Ecken versehen sind.

4. Statorkern (100) nach einem der Ansprüche 1 bis 3, wobei zwischen den benachbarten Balkenabschnitten (3, 4) in Umfangsrichtung hohle Abschnitte (5, 6) gebildet sind und mittels der hohlen Abschnitte (5, 6) durch zwei axiale Enden des Statorkerns (100) verlaufende Kühlkanäle im Statorkern (100) gebildet sind.

5. Statorkern (100) nach Anspruch 4, wobei der Statorkern (100) mehrere Blechstapel (11, 12, 13) umfasst, die aus den Statorblechen bestehen und in einer Axialrichtung verteilt sind,
wobei in den Blechstapeln (11, 12, 13) die Statorbleche jeweils in Axialrichtung fluchtend angeordnet sind und die hohlen Abschnitte (5, 6) jedes der Statorbleche linear verlaufende Kühlkanalabschnitte bilden,
wobei die Blechstapel (11, 12, 13) so angeordnet sind, dass die Zähne (8) aller Statorbleche des Statorkerns (100) axial ausgerichtet sind und die Kühlkanalabschnitte der benachbarten Blechstapel (11, 12, 13) in Axialrichtung miteinander in Verbindung stehen und nicht vollständig ausgerichtet sind, sodass sie unterschiedlich verlaufende Kühlkanäle bilden.

6. Statorkern (100) nach Anspruch 5, wobei die Kühlkanalabschnitte, die die unterschiedlich verlaufenden Kühlkanäle bilden, jeweils identisch aufgebaut sind und durch die relative Drehung jedes der Kühlkanalabschnitte in Umfangsrichtung mäanderförmige Erstreckungsrichtungen der Kühlkanäle gebildet werden.

7. Statorkern (100) nach Anspruch 5, wobei unter den Kühlkanalabschnitten, die die unterschiedlich verlaufenden Kühlkanäle bilden, Zwischenkühlkanalabschnitte vorhanden sind, wobei die Zwischenkühlkanalabschnitte und die Kühlkanalabschnitte in Verbindung mit den Zwischenkühlkanalabschnitten auf zwei axialen Seiten unterschiedlich aufgebaut sind, wodurch in den Erstreckungsrichtungen variierende Kanalquerschnitte der Kühlkanäle gebildet werden.

8. Statorkern (100) nach einem der Ansprüche 5 bis 7, wobei ein Abstand zwischen den Balkenabschnitten (3, 4) in Umfangsrichtung so ausgelegt ist, dass der Kühlkanalabschnitt mindestens eines Blechstapels mit zwei Kühlkanalabschnitten des Blechstapels in Verbindung stehen kann, der zu dem mindestens einen Blechstapel axial benachbart ist, sodass die Kühlkanäle mit Abzweigungen versehen sind.

9. Statoreinheit, umfassend den Statorkern (100) nach einem der Ansprüche 1 bis 8 und eine Statorwicklung.

10. Motor, umfassend die Statoreinheit nach Anspruch 9.
